# EUROPEAN PATENT APPLICATION

(11) **EP 2 369 387 A1**
(43) Date of publication of application: **28.09.2011**
(21) Application number: 10003122.8
(22) Date of filing: 24.03.2010
(51) Int. Cl.: G02B 6/44, H04Q 1/06, H04Q 1/14

(54) **Cable attachment device, cable attachment means and panel for the cable attachment device**

(71) Applicant: Tyco Electronics Raychem BVBA, 3010 Kessel-Lo (BE)
(72) Inventor: Geens, Johan, 3380 Bunsbeek (BE); Vermeulen, Pieter, 2260 Westerlo (BE); Keustermans, Erik, 3390 (BE)
(74) Representative: Grünecker, Kinkeldey, Stockmair & Schwanhäusser Anwaltssozietät

(57) **Abstract**

The present invention provides a cable attachment device preferably for attaching a cable to a rack adapted to accommodate a plurality of cables terminating in said rack. The cable attachment device comprises a panel (1) having received therein plural openings (2) adapted to receive a cable attachment means (3) adapted to hold a cable. The cable attachment device is characterized in that said cable attachment means (3) comprises an attachment base (4) being projected on opposing end sides thereof by lugs (5) extending in different directions with respect to each other and that said panel (1) has received therein at least one pair of receiving openings (2) adapted to receive the lugs (5) of said cable attachment means (3), wherein said cable attachment means (3) and said receiving openings (2) are adapted to arrange the lugs (5) within the receiving openings (2) by a swivel movement of the cable attachment means (3) around the lug (5) arranged within the associated receiving opening (2) to arrange the opposing lug (5) in the remaining receiving opening (2) followed by a sliding movement of said cable attachment means (3) in a direction essentially parallel to the surface of said panel (1). Thereby, an installation of the cable by means of the cable attachment device can be improved.

## Description

The present invention relates to a cable attachment device preferably provided for attaching a cable to a rack adapted to accommodate a plurality of cables terminating in said rack, and to a cable attachment means and a panel used for the cable attachment device.

In the technical field of telecommunication technology to which the present invention preferably refers, a rack may be used along with a management system for fibre optics, which provides a high rate of availability for communication of fibre optic cables in distribution network, access network, wide area network and the like. For instance, the rack may be used along with a fibre glass management system commonly known under the registered trademark FIST (Fibre Infrastructure System Technology) of the applicant. Said rack preferably is a metal rack for accommodating all provisions for fibre cable termination and management, for pigtail or jumper containing and routing. The rack usually comprises a base frame and optionally side ducts for housing splicing shelves, patching and mixing shelves. The rack is at least composed of a panel which may be fixed to a wall.

In order to attach the fibre optic cable to the rack, a cable attachment device is used which comprises a panel having received therein plural openings each adapted to receive a cable attachment means adapted to secure a strength member of said fibre optic cable against the rack. The fibre optic cable includes at least one optical fibre element, at least one strength member and an outer cable jacket for protecting the at least one optical fibre element against environmental influences. The at least one strength member is commonly made of synthetic or natural fibres, which offer effective strength to weight ratios and which are light and flexible. The strength member is used to be secured against the rack to absorb pulling forces which may act onto the fibre optic cable in its longitudinal direction. Therefor, the outer cable jacket is removed to expose the at least one strength member and the at least one optical fibre element. The strength member is fixed on the panel of the known cable attachment device, wherein the panel has been previously secured against the rack. The fixation of the strength member is obtained by means of cable attachment means, wherein the at least one optical fibre element is further guided into an inside of the rack. Particularly, the cable attachment means is formed of a sleeve for receiving an end of the strength member, wherein the sleeve provides screws for clamping the end of the strength member inside the sleeve. The sleeve is projected in its longitudinal direction by a small plate having an opening into which a fixation screw is inserted to fix the sleeve to the panel by screwing. The panel is generally secured against the rack. Additionally, the jacket of the optical fibre cable is secured against the rack or the panel by means of a cable clamp.

Accordingly, the installation of the fibre optic cable is performed in a secured state of the panel against the rack. Therefore, respective space is required at the rack side to allow handling of the fibre optic cable installation. Furthermore, for installing a plurality of fibre optic cables in the rack, a larger space is needed, wherein care has to be taken of the already installed fibre optic cables during installation of further fibre optic cables, which makes the installation of a plurality of fibre optic cables in the rack complicated.

The object of the present invention is to provide an improved cable attachment device allowing a simplified and accelerated installation of a cable preferably in a rack.

The present invention is preferably provided for installing fibre optic cables in a rack. However, the present invention is not to be understood to be restricted to said kind of cables or to the rack described above. The present invention may be applied for any kind of cables to be attached. Further preferably, the present invention may be applied to drop cables, cables comprising a strength member or the like, wherein said cables may be preferably attached to a rack adapted to accommodate a plurality of cables terminating in said rack.

The above object is solved by a cable attachment device according to claim 1. The inventive cable attachment device is characterized by a cable attachment means which comprises an attachment base being projected on opposing end sides thereof by lugs extending in different directions with respect to each other. Preferably, the lugs extend in directions perpendicular to each other. Particularly, one lug extends in a direction parallel to a longitudinal direction of the cable attachment means, whereas the opposing lug projects the attachment base in surface width direction thereof, that is in a direction perpendicular to the longitudinal direction of the attachment base. More preferably, in an alternative embodiment thereto, the lugs extend in opposing directions with respect to each other. Specifically, each lug extends in parallel to the longitudinal direction of the attachment base and away therefrom. The cable attachment means may be formed thereby with a small shape in surface width direction thereof. The cable attachment means is preferably formed of a metal strip. The inventive cable attachment device further comprises a panel, which has received therein at least one pair of receiving openings adapted to receive the lugs of said cable attachment means. The panel is also preferably formed of a metal strip, wherein the at least one pair of receiving openings is preferably formed by die-cutting. The receiving opening provides a size adapted to allow insertion of an associated lug of the cable attachment means. The cable attachment means and the receiving openings of the panel are adapted to arrange the lugs within the receiving openings initially by a swivel movement of the cable attachment means around the lug arranged within the associated receiving opening to arrange the opposing lug in the remaining receiving opening and by a subsequent sliding movement of said cable attachment means in a direction essentially parallel to the surface of said panel. In the course of such sliding movement, the final position of the cable attachment means relative to the panel can be obtained. For attachment of the cable attachment means, one of the lugs is usually inserted into the receiving opening recessed within the panel. The respective receiving opening and the coordinated lug are designed such, that the cable attachment means being secured in one of the receiving openings can be pivoted in such a way, that the other lug can path into the receiving opening recessed for this lug. After that, the cable attachment means is moved in a sliding movement essentially parallel to the surface of the panel such, that both free ends of the lugs will be arranged on a rearward side of the panel with the attachment base of the cable attachment means being arranged on the other, i.e. front surface side of the panel.

Due to said configuration, a simple installation of the cable attachment means on the panel and securing of the cable attachment means against the panel may be obtained without the necessity of using fixation screws.

Preferably, the surfaces of the cable attachment means and of the panel facing each other are of a flat shape for providing an unhindered sliding movement of the cable attachment means essentially parallel to the surface of the panel. Further preferable, the lugs extend in longitudinal direction of the cable attachment means offset from the attachment base toward a rear side thereof. Particularly, each lug is connected to the attachment base by an offset portion essentially aligning the lugs in a common plane, which is spaced from a rear surface side of the attachment base. The lugs may preferably extend essentially in parallel to the longitudinal direction of the attachment base. Accordingly, after inserting the lugs into the receiving openings and slide moving the cable attachment means in the direction essential parallel to the surface of the panel, the lugs engage behind a rear side surface of the panel and overlap therewith. Thus, a securing of the cable attachment means in a direction perpendicular to the surface of the panel may be achieved.

Further preferable, the lugs may extend from the offset portion slightly inclined towards a plane including the rear surface side of the attachment base to co-operate with the panel and the attachment base in the received state of the cable attachment means so as to provide a tension in perpendicular direction to the surface of the panel. Thereby, the securing of the cable attachment means in the perpendicular direction may be further improved.

Preferably, a distance between inner opposing rims of the at least one pair of receiving openings is smaller than a length of the attachment base in a direction of said distance. More preferably, one of the receiving openings provides in a direction including the at least one pair of receiving openings, an opening size larger than a corresponding opening size of the other one of the receiving openings. Additionally, the associated lugs of the cable attachment means are similarly shaped. That is, one lug has a length in longitudinal direction of the cable attachment means larger than a longitudinal length of the opposing lug, wherein the lugs are preferably adapted to fit in the associated receiving opening of the at least one pair of receiving openings. In other words, the size of each lug corresponds preferably to an opening size of the associated receiving opening. Thereby, a slipping of the cable attachment means in the direction perpendicular to the slide moving direction may be minimized in a received state of the cable attachment means within the receiving openings.

Further preferable, a longitudinal length of the attachment base is larger than a sum of the distance between the inner rims of the receiving openings and the longitudinal length of the shorter lug. According to said configuration, the afore-described securing of the cable attachment means against the panel in the direction perpendicular to the surface of the panel may be further improved.

Generally, the panel comprises means for securing the panel against the rack. Preferably, the panel may be clamped onto the rack. Further preferable, the panel comprises at one end side inserting means adapted to be received within an inserting opening provided with the rack and at the opposed end side a spring clamp adapted to be clamped behind a holding flange provided with the rack, respectively. According thereto, the panel may be simply attached to the rack.

Based on the above configuration and the preferred further structure of the cable attachment means and the panel, the cable to be attached to the rack may be previously secured outside the rack against the cable attachment means, wherein the cable attachment means may be assembled with the panel in its released or secured state with respect to the rack. That is, in the secured state of the panel, it is installed in the rack prior to the attachment of the cable attachment means thereto. The released state of the panel allows a handling of the panel outside of the rack. Accordingly, the assembling of the cable attachment device and the securing of the cable thereon may be conducted completely outside the rack, whereby rack space normally provided for handling the cable to secure it against the rack may be reduced. The rack may be then designed with a smaller size, or the shelves managing the cable terminations may be provided with further space therefor. Moreover, the fixation of the strength member may be conducted without the risk of interfering or damaging a fixation of already installed cables. The cable attachment device with the thereon fixed cables may be then simply hooked in the rack. Hence, an installation of the cable in the rack is improved.

Preferred embodiments of the cable attachment device are subject to the dependent claims.

According to a preferred embodiment of the cable attachment device according to claim 3, the cable attachment means can be reliably secured against the panel. Preferably, the securing means is formed of a resilient material and the securing means is preferably movably held attached by the attachment base of the cable attachment means.

Further preferable, the securing means is configured as defined in dependent claim 4. Moreover, the securing opening is preferably provided between the receiving openings forming a functional pair for holding one cable attachment means. Additionally, the securing opening is preferably arranged at a position denoting a stop position for the sliding movement of the cable attachment means in the direction essentially parallel to the surface of the panel. Particularly, by inserting the lugs of the cable attachment means into the at least one pair of receiving openings, the free end of the spring lug abuts against the surface of the panel, whereby the spring lug is resiliently pushed away from the panel. By the sliding movement of the cable attachment means in the direction essentially parallel to the surface of said panel, the free end of the spring lug is finally aligned with the securing opening and pushed therein by the elastic force of the spring lug, thereby stopping the slide movement of the cable attachment means and holding it at predetermined position in sliding movement direction. At said position, the lugs of the cable attachment means projects the receiving openings and engage behind the panel to secure the cable attachment means in the direction perpendicular to surface of the panel. Thus, the cable attachment means are reliably held on the panel by interaction of the spring lug and the lugs received within the receiving openings of the panel. A release of the cable attachment means may be simply achieved by pulling the free end of the spring lug out of the securing opening and by sliding the cable attachment means in the direction essentially parallel to the surface of said panel toward a releasing position of the cable attachment means, which is a position by which the cable attachment means can be released from the panel.

In a further preferred embodiment of the cable attachment device according to claims 5 or 6, the securing means may be alternatively or additionally provided with the panel, wherein the securing opening is received within the cable attachment means, preferably within the attachment base. The further configuration of the securing means and of the securing opening may preferably correspond to the one described above with respect to the cable attachment means, wherein the operation of the securing means and of the securing opening may be transferred, respectively, thereby providing similar effects.

In an alternative embodiment, the securing means may be formed of a screw adapted to be inserted through a screw opening provided by the cable attachment means and to be screwed into the securing opening formed with an inner thread. In other words, after mounting the cable attachment means on the panel, the cable attachment means is slided in the direction essentially parallel to the surface of said panel until the screw opening overlaps with the securing opening of the panel in order to allow fixation of the securing means by screwing the securing means received within the screw opening into the securing opening. Due to said configuration, a shape of the cable attachment means may be further simplified.

According to a further preferred embodiment of the cable attachment device according to claim 7, a plurality of cable attachment means with cables or strength members secured thereon may be provided on a single panel in a more compact form, wherein a space provided with the rack for the cable attachment device may be effectively used. Moreover, the fixation base may provide a grip for simply installing the cable attachment means on the panel. Thus, an assembling of the cable attachment means with the panel may be further improved.

Due to the configuration of a further preferred embodiment of the cable attachment device according to claim 8, the cable may be reliably secured against the fixation base. Preferably, the fixation base comprises at least at one longitudinal end side laterally thereof at least one pair of opposing recesses, which are adapted to co-operate with retaining means, preferably such as a tie wrap, for retaining the outer cable jacket and/or at least one signal transmitting element guided by the cable. Further preferable, the fixation base provides the retaining portion at opposing longitudinal end sides. Thereby, the cable may be retained on the fixation base before and/or behind the fixation of the cable, or of the strength member preferably provided with the cable, to prevent a probably releasing of the fixed cable (strength member) by further handling the cable after securing it preferably against the rack. Hence, a securing of the cable may be further improved.

According to a further aspect of the present invention, it is an object to provide a cable attachment means for the cable attachment device. Said object is solved by a cable attachment means according to claim 9.

In compliance with a further aspect of the present invention, it is an object to provide a panel for the cable attachment device. Said object is solved by a panel having the features as defined in claim 13.

Preferably, the inventive cable attachment means and the inventive panel may be configured as described above with respect to the inventive cable attachment device, whereby similar effects may be achieved.

The present invention will now be described in further detail by referring to a preferred embodiment depicted in the accompanying drawings. In these drawings:
- Figure 1: shows a perspective side view of a cable attachment device according to the present invention;
- Figure 2: shows a perspective side view of a cable attachment means for the cable attachment device as shown in Figure 1;
- Figure 3a - 3c: show an assembling of the cable attachment device as shown in Figure 1; and
- Figure 4a - 4c: show an assembling of the cable attachment means as shown in Figure 2.

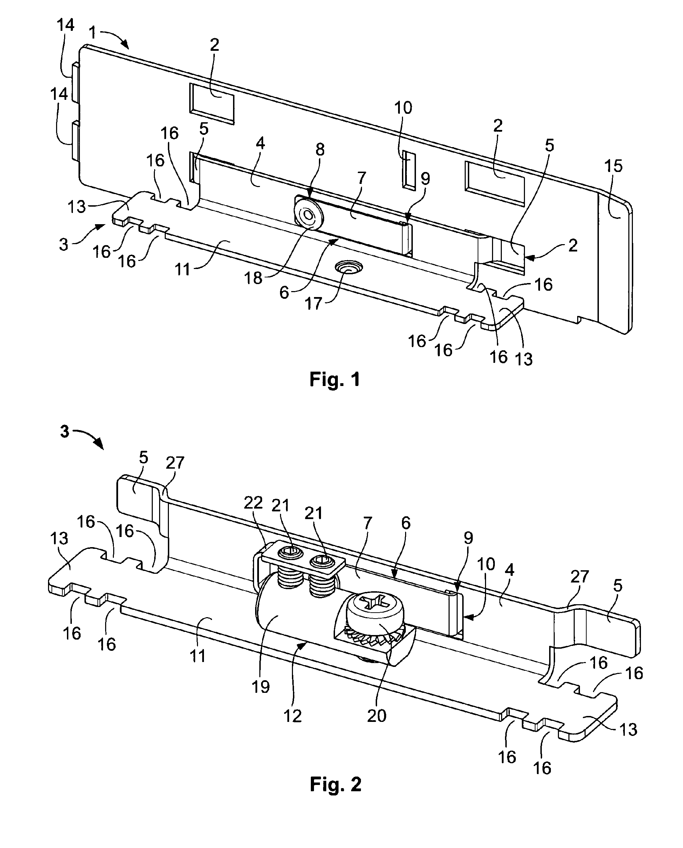

Figure 1 shows a perspective side view of the cable attachment device according to the present invention. The cable attachment device comprises a panel 1 made of a metal strip and having received therein two pairs of receiving openings 2 with a securing opening 10 provided between each pair of receiving openings 2. The two pairs of the receiving openings 2 are arranged one above the other in Figure 1. It has to be understood, that the panel 1 is only shown with two pairs of receiving openings 2 for elucidating the invention. In practice, the panel 1 will have multiple pairs of receiving openings 2 arranged one above the other. That can be plural rows of pairs of receiving openings 2 provided by the panel 1 next to each other. The panel 1 further comprises at one longitudinal end side a pair of bars 14 projecting said longitudinal end side of the panel 1. At the opposed longitudinal end side, the panel 1 has a flange 15 projecting the opposed longitudinal end side slightly inclined with respect tot the surface plane of the panel 1 towards a side from which the cable attachment means is assembled on the panel 1. The bars 14 and the opposed flange 15 are suited for clamping the panel in an associated configuration of the rack by inserting the bars 14 into respective openings provided by said rack configuration and by clamping the flange 15 behind an edge formed by said rack configuration. As the panel 1 is made of a metal strip, the panel 1 can be slightly deformed for bringing the flange 15 behind the rack edge.

The cable attachment device further comprises the cable attachment means 3, which is formed of a metal strip by cutting and bending. The cable attachment means 3, as particularly shown in Figure 2, comprises an attachment base 4 being projected on opposing end sides thereof by lugs 5. The lugs 5 extend in opposing directions with respect to each other and parallel to a longitudinal direction of the attachment base 4. The lug 5 is connected to the attachment base 4 by an offset portion 27, which projects essentially perpendicular from a rear surface side of the attachment base 4, wherein the lugs 5 extend in a common plane spaced from the rear side of the attachment base 4. The projecting length of the offset portion 27 is larger than a thickness of the panel 1.

The cable attachment means 3 further comprises a fixation base 11 connected to the attachment base 4 at a lateral side thereof. The fixation base 11 and the attachment base 4 with the lugs 5 have essentially an identical length in longitudinal direction of the cable attachment means 3. The cable attachment means 3 can be thereby simply manufacturing from a metal strip by die cutting the metal strip to form the circumferential shape of the cable attachment means 3 with its holes 17, 23, 24 and by bending the fixation base 11 and the lugs 4 with respect to the attachment base 4 to obtain the end shape of the cable attachment means 3.

The fixation base 11 comprises laterally at each longitudinal end side 13 two pairs of opposing recesses 16. Each pair of the recesses 16 denotes a retaining portion and is adapted to receive means like a tie wrap for retaining at one longitudinal end side 13 the outer cable jacket and at the opposed longitudinal end side 13 the signal transmitting element guided by the cable.

The cable attachment means 3 have an L-shaped cross-section, with the fixation base 11 forming a horizontal portion and the attachment base 4 extending in vertical direction when being fixed to the panel 1. Particularly, the fixation base 11 protrudes from the lateral side of the attachment base 4 in a direction opposed to the protruding direction of the offset portion. Accordingly, a plane defined by the fixation base 11 extends transverse to the plane defined by the attachment base 4, wherein the fixation base 11 and the attachment base 4 enclose between their facing surfaces an angle of approximately 90°. Thus, two cable attachment means 3 can be provided on the panel 1 side by side in lateral direction of the panel 1, thereby allowing a compact structure of the cable attachment device (cp. Figure 1).

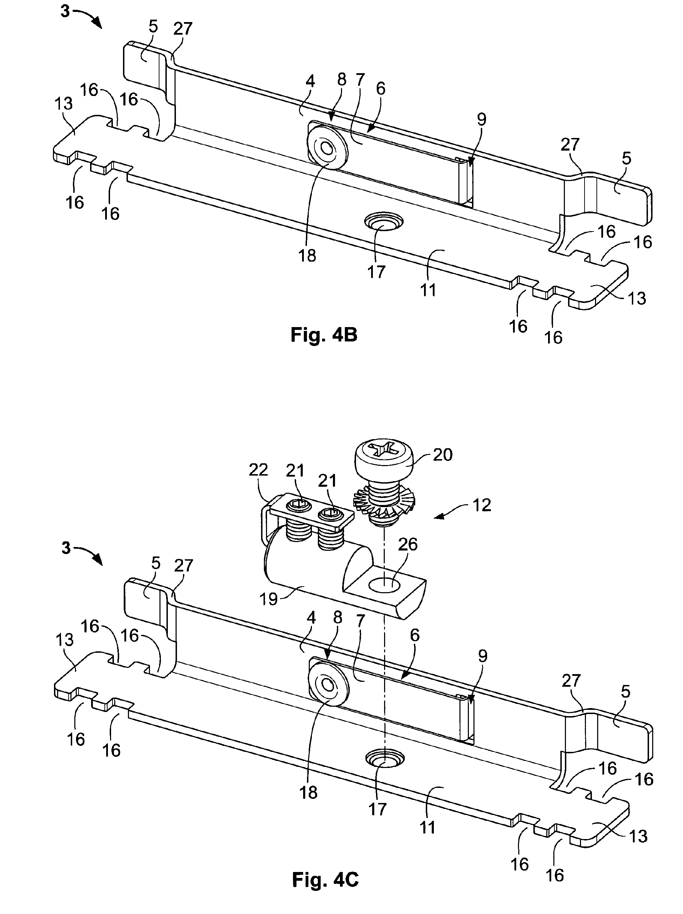

The fixation base 11 comprises a screw hole 17 in an area between the pair of recesses 16. Said screw hole 17 is adapted to secure a fixation 12 (cp. Figure 2) against the fixation base 11. Said fixation 12 comprises a sleeve 19 of a stepped shape. In other words, the sleeve 19 comprises a round shaped portion projected in longitudinal direction thereof by a protruding portion providing an upper flat surface. The round shaped portion of the sleeve 19 comprises a pair of small screw holes extending perpendicular to the longitudinal extension direction of the sleeve 19. Said screw holes receives sleeve screws 21 which are connected to a U-shaped bridge 22, which extends with its parallel legs in longitudinal direction of the sleeve 19 inside the sleeve 19 and outside thereof. Said sleeve screws 21 and said bridge 22 co-operate with each other to clamp the strength member inserted with its end into the sleeve 19 by screwing the sleeve screws 21 towards the sleeve 19 to move the bridge 22 accordingly. The strength member of the cable will be clamped between an inside surface of the sleeve 19 and the leg of the bridge 22 protruding to the inside the sleeve 19. The sleeve 19 further comprises at its step shaped portion a through hole 26, through which a fixation screw 20 is inserted to be screwed into the fixation hole 17 (cp. Figure 4c). Thereby, the sleeve 19 with the strength member can be secured against the fixation base 11.

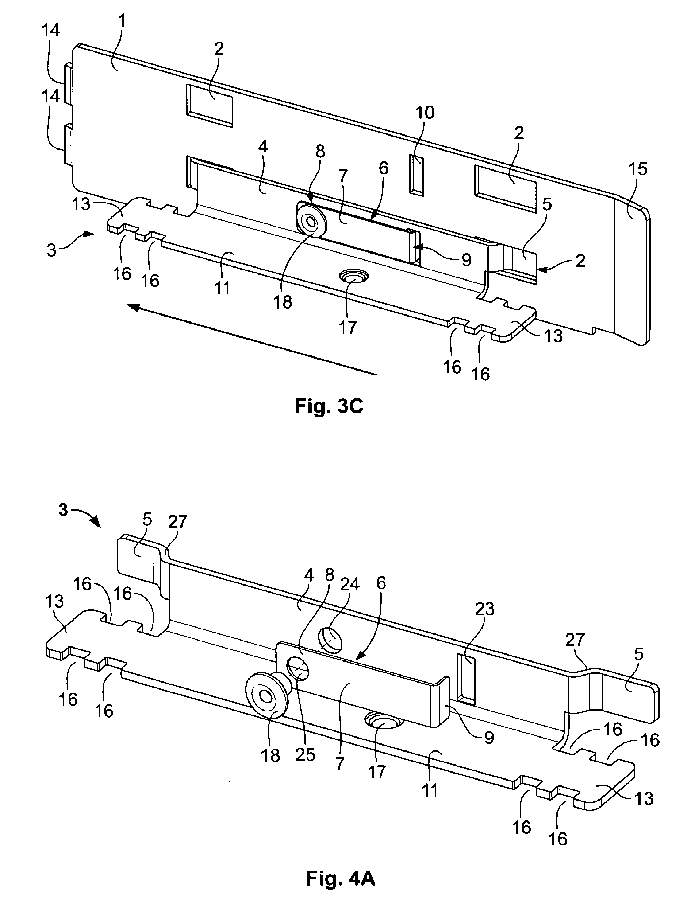

As further shown in Figure 1 and Figure 4a, the cable attachment device comprises a securing means 6 movably held attached by the cable attachment means 3 and having a securing portion 18 adapted to cooperate with the panel 1 to secure the cable attachment means 3 against the panel 1. The securing means comprises a spring lug 7 of an L-shape with one end 8 forming a fixation end of the larger leg and a free end 9 forming the free end of the shorter leg. Said spring lug 7 is made of a thin metal strip of spring steel. The free end 9 is received by a securing hole 23 formed in the attachment base 4. The shorter leg projects from the larger leg by a length which is larger than a thickness of the attachment base 4. Particularly, the free end 9 projects the rear surface side of the attachment base 4 by a length corresponding to a projection length of the offset portion 27. Hence, the free end 9 will be reliably received within the securing opening 10 of the panel 1.

The fixation end 8 provides a receiving hole 25, which receives the securing portion 18. The securing portion 18 is further received within a hole 24 formed in the attachment base 4. The portion of the securing portion 18 extending through the receiving hole 25 and the hole 24 has an outer diameter larger than an inner diameter of the holes 24, 25, which are essentially identical. Moreover, the securing portion 18 forms a plug made of an elastically material such as rubber or the like. Thereby, the spring lug 7 can easily be secured against the attachment base 4. The securing portion 18 may be made of any other material suitable for securing the spring lug 7 against the attachment base 4. The securing portion 18 may be formed e.g. by a plug or a rivet. The securing portion 18 should not project the attachment base 4 on the rearward surface thereof.

As particularly shown in Figure 4a to 4c, an assembling of the cable attachment means 3 is shown. The spring lug 7 is mounted on the attachment base 4 by inserting the free end 9 into the securing hole 23, whereby the receiving hole 25 is brought to an overlapping state with the hole 24 for inserting the plug 18 therein. Thereafter, the fixation 12 is fixed to the fixation base 11 by mounting the sleeve 19 onto the fixation base 11 and inserting the fixation screw 20 into the through hole 26 and screwing said fixation screw 20 into the screw hole 17 of the fixation base 11. The screw hole 17 is provided at a position adapted to place the round-shaped portion of the sleeve 19 adjacently to the securing portion 18 in its received state. The securing portion 18 projecting a surface of the spring lug 7 provides a cushion for the fixation 12 in lateral direction thereof. Moreover, in the assembled state of the cable attachment means 3, the fixation 12 prevents a releasing of the plug 18 from the spring lug 7.

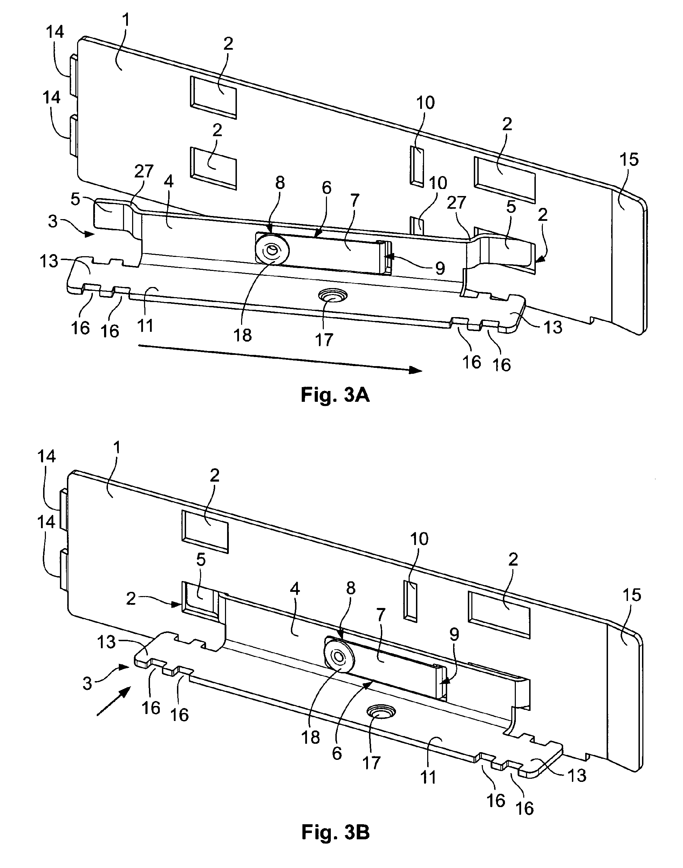

Figures 3a to 3c show an assembling of the cable attachment means without the fixation 12 provided on the panel 1. The cable attachment means 3 is inserted with one lug 5 into the associated receiving opening 2. The cable attachment means 3 is then moved in a direction essentially toward the near longitudinal end side of the panel 1 for inserting thereafter the opposed lug 5 into the associated opposed receiving opening 2. As shown in Figures 3a and 3b, one receiving opening 2 has an opening size in longitudinal direction of the panel 1 larger than an opening size of the corresponding opposed receiving opening 2. Further, the spring lugs 5 have a size to fit into the respective receiving openings 2.

After inserting the small sized lug 5 into the associated receiving opening 2, the free end 9 of the spring lug 7 is pushed away from the surface of the panel 1 due to the fixation of the one end 8 of the spring lug 7 by the securing portion 18. The cable attachment means 3 is then slidingly moved in the direction essentially parallel to the surface of the panel 1 until the free end 9 is received by the securing opening 10. Due to the receiving state of the free end 9 in the securing opening 10, a movement of the cable attachment means 3 in the direction essentially parallel to the surface of the panel 1 can be prevented. The securing opening 10 is provided at a position ensuring an overlapping of each lug 5 with a rear side surface of the panel 1, thereby securing the cable attachment means 3 against the panel 1 in the direction perpendicular to its surface. A releasing of the cable attachment means 3 from the panel 1 can be conducted in a reversed order starting with releasing the free end 9 from the securing opening 10, moving the cable attachment means 3 in the direction essentially parallel to the surface of the panel 1 and releasing it therefrom, respectively.

Due to the above described preferred embodiment of the cable attachment device, the cable can be secured with its strength member outside of the rack against the cable attachment device, thus allowing an easier handling of the cable and of the cable attachment device, respectively. Thereby, the cable attachment device with the thereon secured cable can be simply attached in the rack. However, the panel 1 does not necessarily need to be previously attached to the rack for mounting the cable attachment means 3 on the panel 1. The panel 1 and the cable attachment means 3 can be assembled outside of the rack, whereby a degree of handling the cable attachment device is improved.

Even though the present invention has been described with respect to a preferred embodiment of a cable comprising a strength member, the present invention is not to be construed to be limited thereto. The present invention may be applied to further cables not comprising a strength member, such as drop cables or the like. Moreover, the present invention may be applied to further products or applications such as boxes, shelves, closures, manholes e.g. for purpose of fast installation, and the like.

### Reference list

- 1: panel
- 2: receiving opening
- 3: cable attachment means
- 4: attachment base
- 5: lug
- 6: securing means
- 7: spring lug
- 8: fixation end of the spring lug
- 9: free end of the spring lug
- 10: securing opening
- 11: fixation base
- 12: fixation
- 13: longitudinal end of the fixation base
- 14: bar
- 15: flange
- 16: recess
- 17: screw hole
- 18: securing portion
- 19: sleeve
- 20: fixation screw
- 21: sleeve screw
- 22: bridge
- 23: securing hole
- 24: hole
- 25: receiving hole
- 26: through hole
- 27: offset portion

## Claims

1. Cable attachment device comprising
a panel (1) having received therein plural openings (2) adapted to receive a cable attachment means (3) adapted to hold a cable;
**characterized in that**
said cable attachment means (3) comprises an attachment base (4) being projected on opposing end sides thereof by lugs (5) extending in different directions with respect to each other;
said panel (1) has received therein at least one pair of receiving openings (2) adapted to receive the lugs (5) of said cable attachment means (3); and
said cable attachment means (3) and said receiving openings (2) are adapted to arrange the lugs (5) within the receiving openings (2) by a swivel movement of the cable attachment means (3) around the lug (5) arranged within the associated receiving opening (2) to arrange the opposing lug (5) in the remaining receiving opening (2) followed by a sliding movement of said cable attachment means (3) in a direction essentially parallel to the surface of said panel (1).

2. Cable attachment device according to claim 2, **characterized in that** said lugs (5) extend in opposing directions with respect to each other.

3. Cable attachment device according to claim 1 or 2, **characterized by** a securing means (6) movably held attached by the cable attachment means (3) and having a securing portion (18) adapted to co-operate with said panel (1) to secure said cable attachment means (3) against said panel (1).

4. Cable attachment device according to claim 3, **characterized in that** said securing means (6) comprises a spring lug (7) having one end (8) thereof being attached to the cable attachment means (3) and a free end (9) thereof projects said attachment base (4) in a direction essentially perpendicular to a plane defined by the panel (1) and received within a securing opening (10) received within the panel (1).

5. Cable attachment device according to any one of the preceding claims, **characterized by** a securing means movably held attached by the panel (1) and having a securing portion adapted to co-operate with said cable attachment means (3) to secure said cable attachment means (3) against said panel (1).

6. Cable attachment device according to claim 5, **characterized in that** said securing means comprises a spring lug having one end thereof being attached to the panel (1) and a free end (9) thereof projects said panel (1) in a direction essentially perpendicular to a plane defined by the panel (1) and received within a securing opening received within the cable attachment means (3).

7. Cable attachment device according to any one of the preceding claims, **characterized in that** the cable attachment means (3) comprises a fixation base (11) connected to the attachment base (4) and adapted to hold a fixation (12) for the cable, wherein a plane defined by the fixation base (11) extends transverse to a plane defined by the attachment base (4).

8. Cable attachment device according to claim 7, **characterized in that** the fixation base (11) provides at least at one longitudinal end side a retaining portion (16) for retaining a part of the cable.

9. Cable attachment means (3) made of a longitudinal sheet material forming an attachment base (4), which attachment base (4) is projected by a lug (5) provided on each end side of the longitudinal sheet material, the lugs (5) extend in different directions with respect to each other, wherein the cable attachment means (3) comprises a fixation (12) for a cable connected to a front surface side of the attachment base (4), and
either a securing means (6) projecting a rear surface side of the attachment base (4) and being movable relative thereto and projecting a securing hole (23) received within the attachment base (4), or
a securing opening for receiving a securing means projecting a panel (1) between a pair of receiving openings (2) adapted to receive the lugs (5), wherein the securing opening is received within the attachment base (4).

10. Cable attachment means (3) according to claim 9, **characterized in that** the lug (5) is integrally formed with the attachment base (4) and connected thereto by an offset portion (27) projecting the attachment base (4) on a surface side opposing said one surface side, and that the lug (5) extends essentially parallel to the attachment base (4).

11. Cable attachment means (3) according to claim 9 or 10, **characterized in that** the cable attachment means (3) comprises said securing means (6) which comprises a spring lug (7) having one end (8) thereof being attached to the front surface side of the cable attachment means (3) and a free end (9) thereof projects the rear surface side with a length corresponding at least to a projection length of the offset portion (27).

12. Cable attachment means (3) according to any one of claims 9 to 11 in combination with claims 7 or 8.

13. Panel (1) for a cable attachment device , wherein the panel (1) comprises at least one pair of receiving openings (2) for receiving lugs (5) of a cable attachment means (3) provided with the cable attachment device, and
either a securing opening (10) for receiving a securing means (6) projecting said cable attachment means (3), wherein said securing opening (10) is arranged between the at least one pair of receiving openings (2), or
a securing means arranged between the at least one pair of receiving openings (2) and projecting a front surface side of the panel (1) and being movable relative thereto and projecting a securing hole received within the panel (1).

14. Panel (1) according to claim 13, **characterized in that** the panel (1) comprises said securing means which comprises a spring lug having one end thereof being attached to the panel (1) and a free end thereof projects said panel (1) in a direction essentially perpendicular to a plane defined by the panel (1) and received within a securing opening received within the cable attachment means (3).
